(19) Europäisches Patentamt / European Patent Office / Office européen des brevets

(11) **EP 2 566 261 A2**

(12) **EUROPEAN PATENT APPLICATION**
published in accordance with Art. 153(4) EPC

(43) Date of publication:
06.03.2013 Bulletin 2013/10

(51) Int Cl.:
*H04W 52/24* (2009.01)   *H04W 52/26* (2009.01)
*H04W 88/08* (2009.01)   *H04W 16/32* (2009.01)

(21) Application number: 11775272.5

(22) Date of filing: 27.04.2011

(86) International application number:
PCT/KR2011/003103

(87) International publication number:
WO 2011/136567 (03.11.2011 Gazette 2011/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 26.04.2011   KR 20110039147
27.04.2010   KR 20100039003

(71) Applicant: Ericsson-LG Co., Ltd.
Seoul 135-985 (KR)

(72) Inventor: LEE, Jung Seung
Uiwang-si
Gyeonggi-do 437-756 (KR)

(74) Representative: Katérle, Axel et al
Wuesthoff & Wuesthoff
Patent- und Rechtsanwälte
Schweigerstraße 2
D-81541 München (DE)

(54) **SMALL BASE STATION AND UPLINK POWER CONTROL METHOD THEREOF**

(57)   There is disclosed a small base station and a method for measuring information on a wireless environment around a small base station to control uplink transmission power of the small base station. A neighboring environment measuring unit measures information on a neighboring wireless environment of a base station through an uplink or a downlink. A power control parameter calculating unit calculates a power control parameter by using the information on the neighboring wireless environment.

## FIG. 2

EP 2 566 261 A2

## Description

### TECHNICAL FIELD

The present invention generally relates to a mobile telecommunication system, and more particularly to a small base station and a method for measuring information on the wireless environment around a small base station to control uplink transmission power of the small base station.

### BACKGROUND

In an uplink of 3rd generation partnership project (3GPP), long term evolution (LTE) signals may be transmitted or received by using a wireless technology based on single carrier frequency division multiple access (SC-FDMA). In the uplink, a power control of the signals may be essentially performed. More particularly in LTE, a fractional power control (FPC) method may be used. The FPC method may include at least one of an open loop power control method and a closed loop power control method. The open loop power control method compensates a channel variation of lower speed, whereas the closed loop power control method compensates a measurement error of path loss and a change of interference.

In order to provide high quality services to subscriber which requires a high speed transmission rate, a mobile telecommunication system generally uses a small base station, i.e., an indoor femto base station, in addition to a macro base station.

Since it is not easy to determine an optimal condition due to an inconsistent position of a base station (i.e., the small base station is not installed at an optimal position by a service provider, but installed at any position by an user) and varying wireless environment, a self-organizing network (SON), in which the base station and a network are automatically installed and changed, is needed to accommodate the varying wireless environment and data traffic environment. It is required to measure the wireless environment and information on a neighboring network in order to provide the SON. Thus, an effective SON algorithm is realized when accurate and abundant information is input.

As stated above, more base stations are needed to provide a high-quality service in a same coverage. However, a cost for installing and maintaining a network may become expensive. Furthermore, in the case of the small base station such as a femto base station, more base stations may be installed. In addition, a power switch (i.e., between power on and off) of the base stations should be performed freely, and a mobility of the base stations should be allowed. For this reason, in the SON, it becomes necessary that the base station should be able to access and set the SON when the base station is installed at indoor or outdoor and perform cell optimization and management according to neighboring wireless environment. Through the SON, a network provider can automatically manage the network, whereas conventionally, the network was managed manually. That is, in the SON, the base station can automatically set and optimize its setting values.

The SON may be needed for all types of the base stations in order to install and optimize the base stations. Further, in case of the small base stations that are installed by the user, the SON may be necessary. That is, when the small base stations that are installed at indoor by the user or moved to another places, it becomes necessary to reinforce the functions of the SON for convenient installation of the small base stations.

Since the neighboring environment of the small base stations, such as distances between a macro base station and the small base stations, are different from each other, power control parameters of user equipment should be set differently from each other. However, the number of small base stations is more than that of the macro base stations, and the small base stations are not installed at optimal positions by the service provider but installed by the user at different positions. Accordingly, it is difficult to set appropriate power control parameters at each of the small base stations.

### SUMMARY

The present disclosure provides some embodiments of a method for controlling uplink transmission power of a small base station by measuring a neighboring wireless environment of the small base station, and the small base station for the same

In one embodiment, by way of non-limiting example, a small base station may include: a neighboring environment measuring unit configured to measure information on a neighboring wireless environment of a base station through an uplink or a downlink; and a power control parameter calculating unit configured to calculate a power control parameter by using the information on the neighboring wireless environment.

In another embodiment, a method for power controlling of a base station comprising: measuring information on a neighboring wireless environment of the base station through an uplink or a downlink; and calculating a power control parameter by using the information on the neighboring wireless environment.

## BRIEF DESCRIPTION OF THE DRAWINGS

FIG. 1 and FIG. 4 are block diagrams showing illustrative embodiments of a mobile telecommunication system.

FIG. 2 is a diagram showing an illustrative embodiment of a mobile telecommunication system.

FIG. 3 is a block diagram showing an illustrative embodiment of a femto base station.

FIG. 5 is a graph showing processing capacity of a macro cell and performance at a cell boundary.

FIG. 6 is a graph showing processing capacity of a femto cell and performance at a cell boundary.

## DETAILED DESCRIPTION

Embodiments of the present disclosure will now be described in detail with reference to the drawings. In the following, detailed descriptions of well-known functions and constructions will be omitted to avoid obscuring the essence of the present disclosure.

In a mobile telecommunication system, a number of subscriber equipments and a number of small base stations may use a same frequency channel at the same time. The use of the same frequency channel may cause interferences among simultaneous callers and small base stations. Accordingly, each small base station is required to properly control its transmission power in order to improve the system efficiency and call quality. In one embodiment, the small base station may include a femto base station, a pico base station, a mirco base station, an indoor base station, a relay for use in cell expansion and the like. In the drawings, a cell of an outdoor base station is a macro cell and a cell of the small base station is a femto cell by way of example.

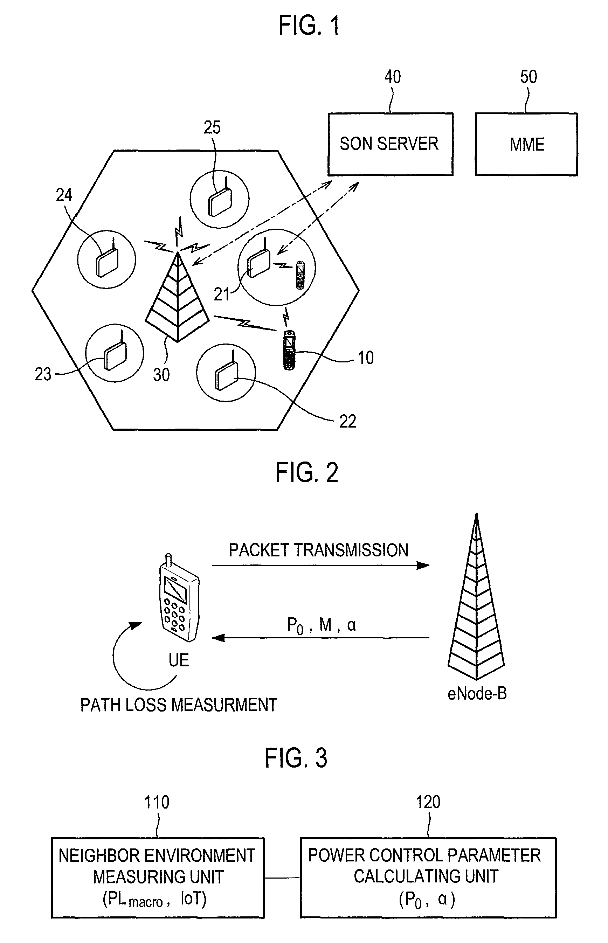

FIG. 1 is a block diagram showing a mobile telecommunication system in accordance with one embodiment of the present disclosure. In one embodiment, the mobile telecommunication system may include a 2G mobile telecommunication network such as a global system for mobile communication (GSM) and a code division multiple access (CDMA), a wireless internet such as a WiFi, a mobile internet such as a wireless broadband internet (WiBro) and a world interoperability for microwave access (WiMax), a mobile telecommunication network supporting a packet transmission (i.e., a 3G mobile telecommunication network such as a WCDMA or a CDMA2000, a 3.5G mobile telecommunication network such as a high speed downlink packet access (HSDPA) or a high speed uplink packet access (HSUPA), a 4G mobile telecommunication network) and any type of mobile telecommunication network including a base station (eNB) 30, femto base stations 21-25 and an user equipment (UE) 10 by way of example.

As shown in FIG. 1, the mobile telecommunication system may comprise at least one network cell or the mobile telecommunication system may comprise different kinds of network cells. The mobile telecommunication may include the femto base stations (Home-eNB) 21-25 maintaining the network cell having a narrow coverage, i.e. the femto cell, the base station (eNB) 30 maintaining the network cell having a wide coverage, i.e. the macro cell, the user equipment (UE) 10, a self-organizing & optimizing networks (SON) server 40 and a mobile management entity (MME) 50. The number of each element of the mobile telecommunication network shown in FIG. 1 is not limited thereto. In one embodiment, the base station 30 may include characteristic of a macro cell base station for about 1 kilometer coverage used in a LTE network, a WiFi network, a WiBro network, a WiMax network, a WCDMA network, a CDMA network, a UMTS network, a GSM network and the like. The base station 30 is not limited thereto.

The femto base stations 21-25 may include characteristic of a femto cell base station for about dozens of meters coverage used in the LTE network, the WiFi network, the WiBro network, the WiMax network, the WCDMA network, the CDMA network, the UMTS network, the GSM network and the like. The femto base stations 21-25 are not limited thereto.

The femto base stations 21-25 are configured to cover a shaded area of the network cell. An effective cell coverage enlargement and a throughput improvement are performed by installing the femto base stations 21-25 at a boundary of the cell. In addition, the femto base stations 21-25 is further configure to communicate between the base station 30 and the user equipment 10. A backhaul link connecting between the base station 30 and the femto base stations 21-25 do not use cabled/wired backhaul but use wireless backhaul.

The network cell comprising the mobile telecommunication system may include the macro cell and the femto cell. The macro cell may be managed by the base station 30 and the femto cell may be managed by the femto base stations 21-25. Each of the femto base stations 21-25 or the base station 30 are connected with a core network independently.

The user equipment 10 may include characteristic of a wireless mobile equipment used in the 2G mobile telecommunication network such as the GSM network and the CDMA network, the wireless internet such as the WiFi network, the mobile internet such as the WiBro network and the WiMax network and the mobile telecommunication network supporting a packet transmission. The user equipment 10 is not limited thereto. In one embodiment, the user equipment 10 may be a macro cell user equipment or a femto cell user equipment.

The SON server 40 may include any type of server that can install and optimize the base station and the femto base stations and provide a basic parameter or data needed at the base station and the femto base stations.

The MME 50 may include any type of entity that can manage a call process of the user equipment 10.

In one embodiment, a network management apparatus may perform a function of the SON server 40 and the MME 50. The SON server 40 and the MME 50 may manage at least one base station 30 and at least one of the femto base stations 21-25.

In the above, the network cell is comprised of at least one macro cell and at least one femto cell. Furthermore, the network cell may be comprised of only macro cells or only femto cells.

FIG. 2 is a diagram showing an illustrative embodiment of a mobile telecommunication system.

In an uplink of the mobile telecommunication system, a power control method is needed, and in the LTE, a fractional power control (FPC) method is used as the power control mehtod. The FPC method may include at least one of an open loop power control method and a closed loop power control method. The open loop power control method may compensate a low speed channel change. The closed loop power control method may compensate a change of interference and a path loss measurement error.

In the FPC method, the power of the uplink is calculated by using the following equation (1).

$$P(i) = \min[P_{\max}, P_0 + 10\log_{10}(M(i)) + \alpha PL + \Delta_{TF}(i) + f(i)] \quad (1)$$

wherein $P_{\max}$ represents a maximum power of the user equipment, $P_0$ represents a power value of a resource block (RB) ranged between -126dBm and +23dBm, $M(i)$ represents a number of the RB assigned at $i^{th}$ transmission time interval (TTI), $\alpha$ has one of value among 0, 0.4, 0.5, 0.6, 0.7, 0.8, 0.9 and 1.0, $PL$ represents the path loss measured by the user equipment, $\Delta_{TF}{}^{(i)}$ represents a power offset according to a transport format or a modulation and coding scheme (MCS), and $f(i)$ represents a power control command of a transmitter. $P_0$, $M(i)$ and $\alpha PL$ are parameters related with the open loop power control method; $\Delta_{TF}(i)$ and $f(i)$ are parameters related with the closed loop power control method.

The FPC method may be operated as an open loop power control mode or a closed loop power control mode based on the setting of the parameters. Especially, the present invention relates to the open loop power control method. The LTE uplink power is calculated by using the equation (2) simplified by assuming that the $\Delta_{TF}(i)$ and $f(i)$ are zero and the number of the RB assigned at each TTI is same in the equation (1).

$$P(i) = \min[P_{\max}, P_0 + 10\log_{10}(M(i)) + \alpha PL] \quad (2)$$

In the above equation (2), $P_{max}$ representing the maximum power of the user equipment is calculated by using the following equation (3).

$$P_{\max} = \min[P_{EMAX}, P_{UMAX}] \quad (3)$$

wherein $P_{EMAX}$ represents a maximum power allowed at an upper layer and $P_{UMAX}$ represents a maximum power settled according to a UE power class. The $P_{UMAX}$ is decided when the UE 10 is manufactured. Always, the $P_{EMAX}$ is scheduled less than the $P_{UMAX}$. Generally, the maximum power of the UE is limited by setting the $P_{UMAX}$ as about 23dBm and the $P_{EMAX}$ as less than 23dBm.

Assuming that a neighboring environment, i.e. distances to the neighboring base stations, is known, the $P_0$ and $\alpha$ of the equation (2) are determined and the power control value is stored in the base station. If there is a UE trying to access the base station, the base station may transmit the stored power control value to the UE through a broadcast channel or a dedicated channel and may set the number of RB assigned at the TTI. The UE may then determine the transmission power by using the power control value transmitted from the base station and by measuring the path loss between the user equipment and the base station. The user equipment may transmit the packet by using the determined transmission power.

According to a flow of a mobile telecommunication market requiring a high speed data transmission rate, indoor femto base stations 21-25 are used to provide a high-quality service differently from the macro base station 30. Because the neighboring environment, i.e. distances between the macro base station and the femto base stations 21-25 are different from each other, the power control parameters of each of the femto base stations 21-25 are determined differently.

The SON server 40 is adopted to determine the power control parameters of the femto base stations 21-25 having a larger number than that of the macro base station 30. The SON server 40 has functional two steps of a goal.

1. Self-configuration: The self-configuration function is a function that installs a network node automatically or the network cell same as the plug and play function. The self-configuration function may include a self-restoring function when a network apparatus is out of order.

2. Self-optimization: The self-optimization function is a function that optimizes a network performance automatically and adopts to a changeable neighboring wireless environment after the self-configuration.

When the power of the femto base stations 21-25 is on, the femto base stations 21-25 automatically performs the self-configuration function, and then performs self-optimizatoin function to adopt the changeable wireless environment.

FIG. 3 is a block diagram showing an illustrative embodiment of the femto base station. The femto base station 100 may include a neighboring environment measuring unit 110 and a power control parameter calculating unit 120.

The neighboring environment measuring unit 110 may measure information on the neighboring wireless environment such as degree of uplink interference, the path loss between the femto base station 100 and neighboring base stations, and the like. That is, the neighboring environment measuring unit 110 may be in charge of measuring the degree of uplink interference and the path loss between the femto base station 100 and the neighboring base stations. In one embodiment, the path loss between the femto base station 100 and the neighboring base stations is measured by using uplink or downlink receivers of the femto base stations 21-25. In one embodiment, when the femto base stations 21-25 do not have the uplink or downlink receiver, the path loss between the femto base station 100 and the neighboring base stations is acquired by commanding the user equipment 10 to access the femto base stations 21-25. Otherwise, the femto base stations 21-25 may measure distances between the femto base stations 21-25 and the user equipment 10 by using a global positioning system (GPS) to calculate the path loss between the femto base station 100 and the neighboring base stations by using the distances between the femto base stations 21-25 and the user equipment 10 and propagation path loss models. The degree of the uplink interference may be calculated by measuring the receiving power caused by the user equipment 10 located in a neighbor of the femto base stations 21-25

The power control parameter calculating unit 120 may calculate the power control parameter needed for the femto base stations 21-25 by using the information on the neighboring wireless environment measured by the neighboring environment measuring unit 110. In one embodiment, the power control parameter calculating unit 120 may set the power control parameter to increase the power of the user equipment 10 accessing the femto base stations 21-25 when an interference degree caused by the neighboring user equipment 10 is high. In addition, the power control parameter calculating unit 120 may set the power control parameter to decrease the power of the user equipment 10 accessing the femto base stations 21-25 when the interference degree caused by neighboring user equipment 10 is low. Because the power of the user equipment 10 accessing the femto base stations 21-25 may cause an interference to the neighboring base station when the femto base stations 21-25 is located near the neighboring base station, the power control parameter is set not to increase the power of the user equipment 10 over a preset threshold value.

The power control parameter set by the power control parameter calculating unit 120 may be transmitted through the broadcast channel or the dedicated channel by using a radio resource control (RRC) protocol. After the power control parameter is acquired through the broadcast channel or the dedicated channel, the user equipment 10 may calculate the transmission power by using the equation (1) to thereby transmit an uplink packet.

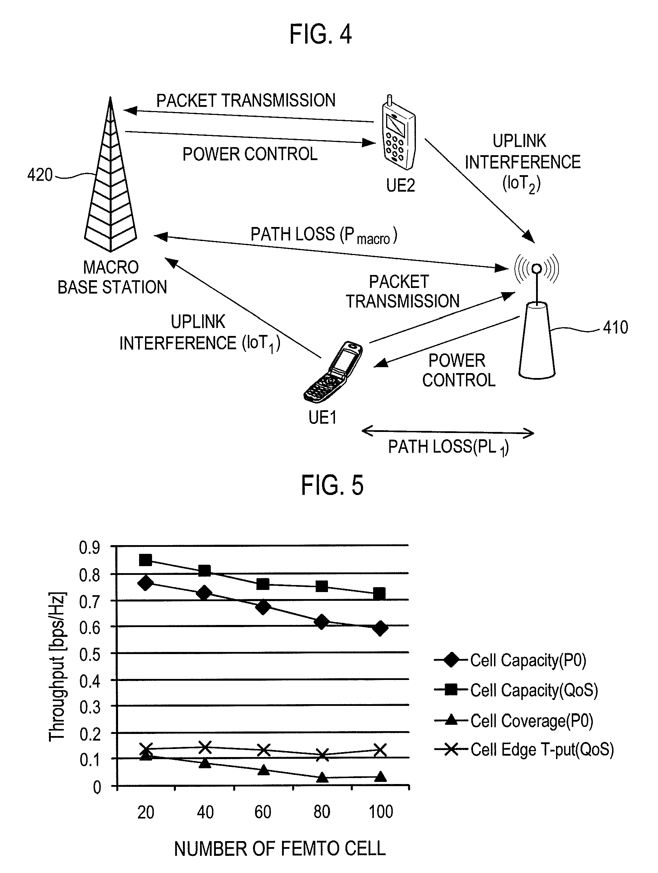

FIG. 4 is a block diagram showing an illustrative embodiment of a mobile telecommunication system.

The power control method according to an embodiment of the present disclosure initially measures the neighboring wireless environment of the femto base station 410. The femto base station 410 may measure the interference degree caused by the neighboring user equipment UE2. The interference degree caused by the neighboring user equipment (UE2) may be transformed to an interference over thermal (IoT) by using following equation (4).

$$IoT = 10 \log_{10}(10^{I/10} + 10^{N/10}) - N \quad (4)$$

wherein $I$ represents the interference degree caused by the neighboring user equipment (UE2), and $N$ represents an interference power.

The femto base station 410 may measure the path loss ($PL_{macro}$) between the femto base station 410 and a neighboring cell (not shown) by using the downlink receiver (not shown). When the femto base station 410 does not have the downlink receiver, the path loss between the femto base station 410 and the neighboring cell is acquired by using the position information provided from the GPS and a path loss value, i.e. a path loss or a reference signal received power (RSRP), is acquired by commanding the user equipment (UE1) to access the femto base stations.

The femto base station may calculate the $P_0$ of the femto base station 410 by using the degree of the interference received from the neighboring user equipment (UE2) and the following equation (5).

$$P_0 = SINR_{edge} - 10 \log_{10}(M) - (\alpha - 1)PL_{edge} + IoT + N \quad (5)$$

wherein $PL_{edge}$ represents the path loss value being relevant to a boundary of the femto base station 410; $SINR_{edge}$ represents quality of service (QoS) at the $PL_{edge}$ as a signal to noise ratio (SINR); and $M_{represents}$ the number of the RB used by the base station and *N* represents the noise power.

The SINR of the user equipment (UE1) accessing the femto base station 410 is calculated by using the equation (6) according to a position ($PL_1$) of the user equipment 410.

$$SINR = (1-\alpha)(PL_{edge} - PL) + SINR_{edge} \quad (6)$$

wherein *PL* represents the path loss between the femto base station 410 and the user equipment UE1.

According to the equation (6), when the user equipment UE1 is located near the femto base station 410, i.e., when the *PL* is small, the $\alpha$ becomes larger as the SINR becomes higher. In one embodiment, when the $SINR_{edge}$ is set to be 0dB, the $PL_{edge}$ is set to be 60dB, and the PL is set to be 40dB, if the $\alpha$ is set to be 0.8, the SINR becomes 4dB. Also, if the $\alpha$ is set to be 0.4, the SINR becomes 12dB. When the user equipment UE1 is located near the femto base station 410, the $\alpha$ is set to a lower number to increase the data transmission rate and the $\alpha$ is set to a larger number to decrease the data transmission rate.

When the power control is performed by using the equation 5, the larger the uplink interference the larger the power of the user equipment UE1 accessing the femto base station 410. If the power of the user equipment UE1 becomes larger, the IoT ($IoT_1$) of the neighboring base station 420 may become larger. In this case, the maximum power of the user equipment UE1 is limited by using the path loss value between the femto base station 410 and the neighboring cell by using the equation (7).

$$P_{EMAX} = 10 \log_{10}(10^{(TargetMacroIoT + N)/10} - 10^{N/10}) + PL_{macro} \quad (7)$$

wherein $PL_{macro}$ represents the path loss value between the femto base station 410 and the neighboring base station 420, and *TargetMacroIoT represents* the IoT of the neighboring base station 420 caused by the user equipment UE1 accessing the femto base station 410.

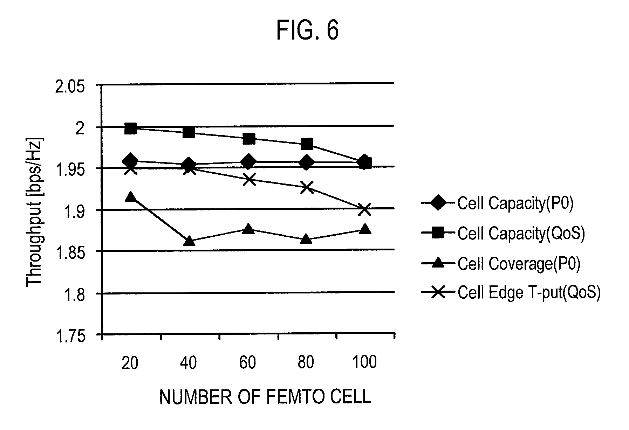

FIG. 5 and FIG. 6 are graphs showing results according to the conventional power control method, in which $P_0$ of the femto cell is set to be fixed, and the power control method of setting the QoS of the femto cell boundary, respectively. FIG. 5 is a graph showing cell capacity of the macro cell and a cell edge throughput according to the two power control methods, and FIG. 6 is a graph showing the cell capacity of a femto cell and performance at a cell boundary. As shown in FIG. 5 and FIG. 6, when a number of the femto cells included in the macro cell changes from 20 to 100, the power control method of setting the QoS of the femto cell boundary, which considers a neighboring cell environment, is superior than the conventional power control method, in which $P_0$ of the femto cell is set to be fixed. The average transmission power according to the conventional power control method of setting $P_0$ of the femto cell to be fixed is -12.2dBm; and that of setting the QoS of the femto cell boundary according to one embodiment of the present invention is -22.2dBm. The power consumption is noticeably decreased when using to the power control method of setting the QoS of the femto cell boundary according to one embodiment of the present invention, which considers the neighboring cell environment.

While the above-described methods are explained with reference to certain exemplary embodiments, the methods can also be realized as a computer readable code in a computer readable recording medium. The computer readable recording medium may include any form of recording apparatus as long as the recording apparatus can store data readable by a computer system. By way of example, the computer readable recording medium may be a ROM, a RAM, a CD-ROM, a magnetic tape, a floppy disk, an optical data storage unit or the like. The computer readable recording medium may also be realized in the form of a carrier wave (e.g., transmission via internet). The computer readable recording medium may be distributed in the computer system connected by a network, where the computer readable code can be stored and executed in a distribution manner. A functional program and, a code and its segments for realizing the above-described embodiments can be easily implemented by programmers skilled in the art.

As used in this application, entities for executing the actions can refer to a computer-related entity, either hardware, a combination of hardware and software, software, or software in execution. For example, an entity for executing an action can be, but is not limited to being, a process running on a processor, a processor, an object, an executable, a thread of execution, a program, and a computer. By way of illustration, both an application running on an apparatus and the apparatus can be an entity. One or more entities can reside within a process and/or thread of execution and an entity can be localized on one apparatus and/or distributed between two or more apparatuses.

The program for realizing the functions can be recorded in the apparatus can be downloaded through a network to the apparatus and can be installed in the apparatus from a computer readable storage medium storing the program therein. A form of the computer readable storage medium can be any form as long as the computer readable storage medium can store programs and is readable by an apparatus such as a disk type ROM and a solid-state computer storage media. The functions obtained by installation or download in advance in this way can be realized in cooperation with an OS (Operating System) in the apparatus.

While certain embodiments have been described, these embodiments have been presented by way of example only, and are not intended to limit the scope of the disclosures. Indeed, the novel methods and systems described herein may be embodied in a variety of other forms; furthermore, various omissions, substitutions and changes in the form of the embodiments described herein may be made without departing from the spirit of the disclosure. The accompanying claims and their equivalents are intended to cover such forms or modifications as would fall within the scope and spirit of the disclosure.

**Claims**

1. A small base station comprising:

   a neighboring environment measuring unit configured to measure information on a neighboring wireless environment of a base station through an uplink or a downlink; and
   a power control parameter calculating unit configured to calculate a power control parameter by using the information on the neighboring wireless environment.

2. The small base station of Claim 1, wherein the information on the neighboring wireless environment includes at least one of information on a degree of uplink interference of a neighboring user equipment and information on a path loss between the small base station and a neighboring base station measured by using a downlink receiver of the small base station.

3. The small base station of Claim 2, wherein the information on the degree of uplink interference is calculated by measuring a receiving power caused by the user equipment located in a neighbor of the small base station by using an uplink receiver.

4. The small base station of Claim 2, wherein the information on a path loss is acquired by measuring the path loss caused by the neighboring base stations of the small base station by using the downlink receiver.

5. The small base station of Claim 2, wherein the information on a path loss is acquired by commanding to the user equipment to access the small base station.

6. The small base station of Claim 2, wherein the information on a path loss is calculated by using a distance between the small base station and the user equipment, and propagation path loss models, and wherein the distance between the small base station and the user equipment is acquired by using a global positioning system (GPS).

7. The small base station of Claim 2, wherein the power control parameter is set to increase the power of the user equipment accessing the small base station when an interference degree caused by a neighboring user equipment is high, and set to decrease the power of the user equipment accessing the small base station when the interference degree caused by the neighboring user equipment is low.

8. The small base station of Claim 2, wherein the power control parameter is set not to increase the power of the user equipment over a preset threshold value when the small base station is located near the neighboring macro base station.

9. The small base station of Claim 2, wherein the power control parameter is transmitted to the user equipment through a broadcast channel or a dedicated channel.

10. The small base station of Claim 9, wherein the user equipment is configured to set an uplink transmission power of the small base station by using the transmitted power control parameter.

11. A method for power controlling of a base station comprising:

   measuring information on a neighboring wireless environment of the base station through an uplink or a downlink; and
   calculating a power control parameter by using the information on the neighboring wireless environment.

**12.** The method of Claim 11, wherein the information on the neighboring wireless environment includes at least one of information on a degree of uplink interference of a neighboring user equipment and information on a path loss between a small base station and a neighboring base station measured by using a downlink receiver of the small base station.

**13.** The method of Claim 12, wherein the power control parameter is set to increase the power of the user equipment accessing the small base station when an interference degree caused by a neighboring user equipment is high and set to decrease the power of the user equipment accessing the small base station when the interference degree caused by the neighboring user equipment is low.

**14.** The method of Claim 13, wherein the power control parameter is set not to increase the power of the user equipment over a preset threshold value when the small base station is located near the neighboring macro base station.

**15.** The method of Claim 11, further comprising:

transmitting the power control parameter to the user equipment; and
setting an uplink transmission power of the user equipment by using the transmitted power control parameter.

# FIG. 1

# FIG. 2

PACKET TRANSMISSION

$P_0$, M, $\alpha$

UE

PATH LOSS MEASURMENT

eNode-B

# FIG. 3

| NEIGHBOR ENVIRONMENT MEASURING UNIT ($PL_{macro}$, IoT) | POWER CONTROL PARAMETER CALCULATING UNIT ($P_0$, $\alpha$) |

# FIG. 4

420

MACRO BASE STATION

PACKET TRANSMISSION

POWER CONTROL

UE2

UPLINK INTERFERENCE ($IoT_2$)

PATH LOSS ($P_{macro}$)

PACKET TRANSMISSION

UPLINK INTERFERENCE ($IoT_1$)

UE1

POWER CONTROL

410

PATH LOSS($PL_1$)

# FIG. 5

- ◆ Cell Capacity(P0)
- ■ Cell Capacity(QoS)
- ▲ Cell Coverage(P0)
- ✕ Cell Edge T-put(QoS)

Throughput [bps/Hz]

NUMBER OF FEMTO CELL

FIG. 6